Europäisches Patentamt

European Patent Office

Office européen des brevets

(11) Veröffentlichungsnummer: **0 270 705 B1**

(12) **EUROPÄISCHE PATENTSCHRIFT**

(45) Veröffentlichungstag der Patentschrift: **03.04.91**

(21) Anmeldenummer: **86117436.5**

(22) Anmeldetag: **15.12.86**

(51) Int. Cl.⁵: **G01B 7/30**, G01B 7/315, G01B 5/255

(54) **Vorrichtung zur Messung des Einschlagwinkels eines lenkbaren Rades eines Kraftfahrzeugs.**

(43) Veröffentlichungstag der Anmeldung:
**15.06.88 Patentblatt 88/24**

(45) Bekanntmachung des Hinweises auf die
Patenterteilung:
**03.04.91 Patentblatt 91/14**

(84) Benannte Vertragsstaaten:
**DE FR GB IT**

(56) Entgegenhaltungen:
**EP-A- 0 189 721**
**US-A- 1 840 766**

(73) Patentinhaber: **Beissbarth, Osmond**
**Sulzbacherstrasse 15**
**W-8000 München 40(DE)**

(72) Erfinder: **Beissbarth, Osmond**
**Sulzbacherstrasse 15**
**W-8000 München 40(DE)**

(74) Vertreter: **Patentanwälte Kirschner & Grosse**
**Forstenrieder Allee 59**
**W-8000 München 71(DE)**

## Beschreibung

Die Erfindung betrifft eine Anordnung zur Messung des Einschlagwinkels eines lenkbaren Rades eines Kraftfahrzeuges gemäß dem Oberbegriff des Hauptanspruches.

Die Messung der Einschlagwinkel der lenkbaren Räder eines Kraftfahrzeugs ist erforderlich bei der Messung des Nachlaufes, der Spreizung und des Spurdifferenzwinkels. Der Nachlauf ist die Neigung des Achsschenkelbolzens bzw. der Radschenkelachse gegenüber einer gedachten, durch die Radmitte verlaufenden Senkrechten. Der Nachlauf wird errechnet aus der Winkelveränderung des Sturzes, d.h. des Neigungswinkels der Räder gegenüber einer senkrechten Ebene, zwischen den Einschlagwinkeln des Rades von 20° Radeinschlag links zu 20° Radeinschlag rechts. Die Spreizung ist der Winkel, um den der Achsschenkelbolzen gegenüber der Senkrechten zur Querachse des Fahrzeuges nach innen geneigt ist. Die Messung der Spreizung erfolgt ebenso wie die Messung des Nachlaufes bei 20° linker Einschlag. Der Spurdifferenzwinkel ist der Winkel zwischen dem Kurveninnenrad und dem Kurvenaußenrad bei einer Kurvenfahrt, und er wird bei 20° Lenkeinschlag des Kurveninnenrades gemessen. Zur Bestimmung dieser Kennwerte der Radaufhängung ist es somit erforderlich, die Einschlagwinkel der lenkbaren Räder zu messen. Schließlich wird neuerdings von den Kraftfahrzeugherstellern gefordert, daß auch der maximale Lenkeinschlag gemessen werden kann, der über den Wendekreis des Fahrzeuges entscheidet. Dazu ist es erforderlich, einen Winkelmeßbereich von bis zu 60° erfassen zu können.

Aus der DE-A-2 650 577 ist eine Vorrichtung zum Messen des Einschlagwinkels von lenkbaren Rädern bekannt, die einen an dem Rad befestigbaren Bezugsteil mit Skala und einen mit dem Bezugsteil um eine im wesentlichen vertikale und unabhängig vom Scheitel des Radeinschlagwinkels angeordnete Achse schwenkbar verbundenen Schwenkarm aufweist, wobei die Skala an dem Bezugsteil und der Schwenkarm gegeneinander verschiebbar sind und einander gegenüberliegende Ableseeinrichtungen für den Schwenkwinkel aufweisen. An dem Bezugsteil ist eine Parallelführung vorgesehen, die einen Projektor zum Erzeugen eines Lichtstrahls, einen Spiegel zum Reflektieren des Lichtstrahls und einen Schirm an dem Projektor aufweist, auf dem der reflektierte Strahl bei entsprechender Ausrichtung des Projektors zu dem Spiegel auftrifft. Der Projektor ist dabei auf dem Schwenkarm angeordnet, während der Spiegel ortsfest gegenüber dem Lenkrad ausgerichtet wird. Diese Vorrichtung ist wegen der Verwendung eines Projektors verhältnismäßig teuer, wegen der erforderlichen Justierung des Spiegels nicht einfach zu handhaben, und sie eignet sich nicht für die elektronische Auswertung der Meßergebnisse.

Aus der EP-A-0 189 721 ist eine Anordnung zur Messung von Spurwinkel- und Spurdifferenzwinkel zwischen den Vorderrädern und Hinterrädern bekannt. Bei dieser Anordnung ist die Meßbasis am Fahrzeug selbst angebracht und zwar entweder an der Karosserie des Kraftfahrzeuges oder dadurch, daß die beiden korrespondierenden Meßgeräte an den Vorderrädern und den dazugehörigen Hinterrädern angeordnet werden.

Aus der US-A-18 40 766 ist eine Anordnung bekannt, bei der auf einer ortsfesten Bezugsbasis Träger montiert sind, die ihrerseits Tastarme mit Tastern aufweist, mit denen Gradstellungswinkel gemessen werden. Hierbei ist das Meßprinzip verwirklicht, bei dem eine feste Bezugsbasis für die Funktionsfähigkeit erforderlich ist.

Demgegenüber liegt der Erfindung die Aufgabe zugrunde, eine einfach zu handhabende und robuste Anordnung zur Messung des Einschlagwinkels eines lenkbaren Rades eines Kraftfahrzeuges anzugeben, bei deren Einsatz keine aufwendige Justierung der Meßanordnung, insbesondere der Meßbasis erforderlich ist und die dennoch genaue, für die elektronische Auswertung geeignete Meßsignale liefert.

Dazu ist die erfindungsgemäße Anordnung dadurch gekennzeichnet, daß die Meßbasis abseits vom Kraftfahrzeug in etwa auf der Verlängerung der Drehachse des Rades auf dem Boden aufstellbar ist, wenn bei Beginn der Messung das Rad auf "Fahrt geradeaus" steht.

Die Handhabung der erfindungsgemäßen Vorrichtung ist äußerst einfach. Zunächst wird das erste elektrische Winkelmeßgerät an dem lenkbaren Rad montiert, wozu Aufnahmevorrichtungen verwendbar sind, wie sie im Zusammenhang mit anderen Radmeßvorrichtungen im wesentlichen bekannt sind. Bei Beginn der Messung, wenn das Rad des Kraftfahrzeugs auf "Fahrt geradeaus" steht, wird sodann die Meßbasis so aufgestellt, daß sich eine Grundlinie von der Drehachse des Winkelmeßgeräts am Rad über den zugehörigen Meßarm, das Spannelement, den Meßarm des zweiten Winkelmeßgerätes zur Drehachse des zweiten Winkelmeßgerätes in der Meßbasis ergibt. Diese Grundlinie sollte mit der Richtung der Raddrehachse zusammenfallen, d.h. rechtwinklig zur Laufrichtung des Rades stehen. Eine genaue Ausrichtung der Grundlinie auf die Richtung der Raddrehachse ist jedoch nicht erforderlich. Wenn das Rad nun eingeschlagen wird, weicht das Winkelmeßgerät am Rad bedingt durch den Rollradius und durch seine Anordnung an der Außenseite des Rades von der Grundlinie ab. Der Meßarm wird durch das Spannelement in Richtung zur Drehachse des Winkelmeßgeräts in der Meßbasis gezogen. Gleichzeitig bewegt sich der Zugarm des Winkelmeßgeräts in der Meßbasis derart, daß er sich auf die Drehachse des Winkelmeßgerätes am Rad ausrichtet. Das Ausgangssignal des Winkelmeßgeräts am Rad enthält somit eine Komponente, die den Einschlagwinkel des Rades darstellt, sowie eine Komponente, die die Abweichung des Winkelmeßgeräts von der Grundlinie enthält. Die Abweichung des Winkelmeßgeräts am Rad wird jedoch von dem Winkelmeßgerät in der Meßbasis erfaßt, so daß diese Abweichung durch Verrechnen der Ausgangssignale der beiden Winkelmeßgeräte eliminiert werden und der reine Einschlagwinkel des Rades erfaßt werden kann. Eine genaue Justierung der Meßbasis auf die Verlängerung der Drehachse des Rades ist nicht unbedingt erforderlich, weil seitliche Abweichungen der Meßbasis von der Verlängerungslinie durch die Verrechnung der Ausgangssignale der Winkelmeßgeräte eliminiert werden.

Bei einer vorteilhaften Ausgestaltung der erfindungsgemäßen Anordnung sind die elektrischen Winkelmeßgeräte jeweils um eine horizontale und im wesentlichen senkrecht zu der Verlängerung der Drehachse des Rades stehende Achse schwenkbar gelagert. Aufgrund dieser Ausgestaltung können die Winkelmeßgeräte verschieden hoch über dem Boden liegen, d.h., Höhendifferenzen der Winkelmeßgeräte können ausgeglichen werden. Daher ist die erfindungsgemäße Anordnung ohne konstruktive Änderungen zur Verwendung an Rädern unterschiedlicher Größe geeignet.

Eine weitere vorteilhafte Ausgestaltung der erfindungsgemäßen Anordnung besteht darin, daß die Winkelmeßgeräte sog. inkrementale Winkelgeber sind. Die Winkelmeßgeräte sind somit Meßgeräte gleicher Bauart und geben Ausgangssignale ab, die nur die Größe der Winkeländerung während der Messung anzeigen. Solche inkrementalen Winkelgeben haben keine absolute Nullmarkierung, sondern geben als Ausgangssignal nur eine solche Größe ab, die sich aus der Winkelbewegung vom Beginn der Messung bis zum Ende des Radeinschlags ergeben. Bei Verwendung dieser Winkelgeber geht daher auch eine Verdrehung der Meßbasis um eine Senkrechte gegenüber der Grundlinie nicht in die Messung ein, so daß eine genaue Aufstellung der Meßbasis insgesamt überflüssig wird.

Nach einer einfachen Ausgestaltung der erfindungsgemäßen Anordnung ist die elektronische Schaltung eine Subtraktionsschaltung, die die absoluten Werte der Ausgangssignale der Winkelmeßgeräte oder die Ausgänge der inkrementalen Winkelgeber voneinander subtrahiert.

Unter Verwendung der erfindungsgemäßen Anordnung bzw. deren vorteilhafter Ausgestaltung läßt sich auf einfache Weise eine Anordnung zur Messung des Spurdifferenzwinkels der lenkbaren Räder eines Kraftfahrzeugs, umfassend je eine solche Anordnung für jedes lenkbare Rad aufbauen. Dabei ist es dann vorteilhaft, eine zusätzliche elektronische Schaltung, in der die Einschlagwinkelsignale, die die Einschlagwinkel der lenkbaren Räder eines Räderpaares darstellen, zur Erzeugung eines Spurdifferenzwinkelsignales verarbeitet werden, und eine mit der zusätzlichen Schaltung verbundene zusätzliche Anzeigevorrichtung für den dem Spurdifferenzwinkelsignal entsprechenden Spurdifferenzwinkel vorzusehen. Dadurch ist es nicht mehr erforderlich, die einzelnen Einschlagwinkel für das linke und das rechte lenkbare Rad abzulesen und separat zu verrechnen. Außerdem kann der Spurdifferenzwinkel direkt einer Auswerteinrichtung zugeführt werden, in der die Meßergebnisse registriert bzw. ausgedruckt werden.

Schließlich ist es vorteilhaft, wenn die Anzeigeeinrichtungen in einem von dem Winkelmeßgerät am Rad und der Meßbasis räumlich getrennten Gehäuse angeordnet sind. Dabei kann die Anzeigeeinrichtung so aufgestellt werden, daß der Bedienungsmann beim Einschlagen der Räder simultan sehen kann, wie weit der Lenkeinschlag fortgeschritten ist.

Weitere vorteilhafte Ausgestaltungen der Erfindung ergeben sich aus den restlichen abhängigen Patentansprüchen.

Ausführungsbeispiele der Erfindung werden nun anhand der beiliegenden Zeichnungen beschrieben. Es zeigen:

Fig. 1     eine schematische Darstellung der hauptsächlichen Teile der erfindungsgemäßen Anordnung;

Fig. 2     eine Draufsicht wie Fig. 1 bei eingeschlagenem Rad;

Fig. 3     eine vergrößerte Draufsicht auf die Meßbasis;

Fig. 4     eine Seitenansicht der Meßbasis;

Fig. 5     eine Seitenansicht der Aufnahmevorrichtung für das Meßgerät am Rad;

Fig. 6     eine Seitenansicht des am Rad montierten Teils der Anordnung; und

Fig. 7     ein Blockdiagramm der Einzelteile der Anordnung.

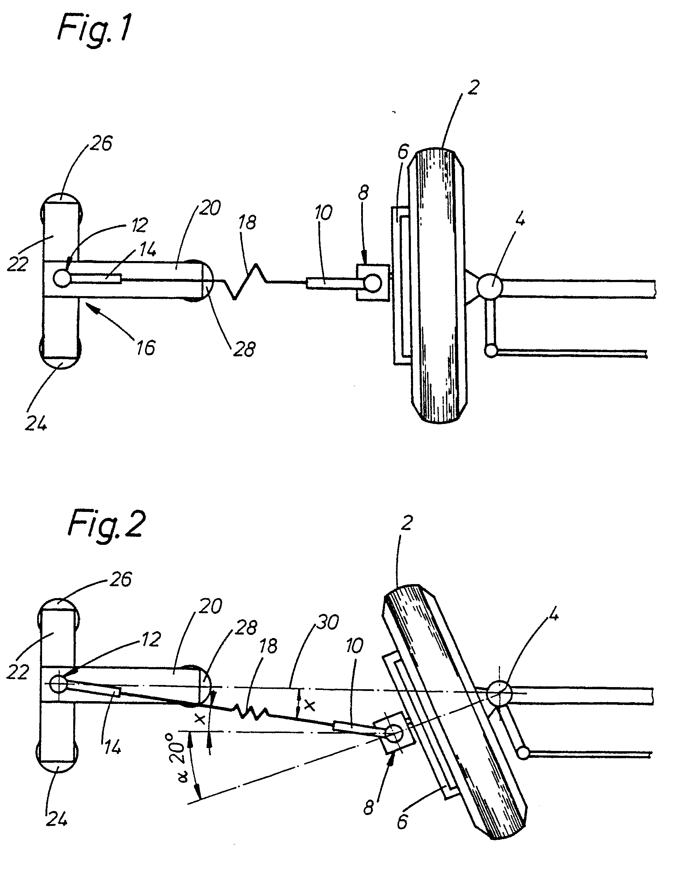

In Fig. 1 ist die Anordnung zur Messung des Einschlagwinkels eines lenkbaren Rades 2 eines Kraftfahrzeuges gezeigt, wobei die Radaufhängung mit dem Achsschenkelbolzen 4 ebenfalls schematisch dargestellt ist. Auf der Außenseite der Radfelge ist eine Aufnahmeeinrichtung 6 befestigt, die ein üblicher Meßgerätehalter mit einer speziellen Anpassung sein kann, die noch beschrieben wird. Ein erstes elektrisches Winkelmeßgerät 8 mit einem um eine im wesentlichen senkrechte Achse schwenkbaren Meßarm 10 ist an dem Rad 2 über die Aufnahmeeinrichtung 6 montiert. Ein zweites elektrisches Winkelmeßgerät 12 mit einem um eine im wesentlichen senkrechte Achse schwenkbaren Meßarm 14 ist an einer Meßbasis 16 angeordnet, und die Meßarme 10, 14 der beiden Winkelmeßgeräte 8, 12 sind miteinander durch ein elastisches Zugelement 18 verbunden. Die Meßbasis 16 ist in der Fig. 1 und 2 teilweise weggebrochen dargestellt, um die Anordnung des Winkelmeßgeräts 12 in der Meßbasis 16 schematisch zeigen zu können. Die Meßbasis 16 hat eine langgestreckte Grundplatte 20 und einen Querträger 22 sowie Füße 24, 26, 28, mit denen sie auf den Boden gestellt wird.

Anhand von Fig. 2 wird die Funktionsweise der Anordnung beschrieben, wobei ein Einschlagwinkel α des Rades 2 von 20° dargestellt ist. In dieser Stellung ist das Winkelmeßgerät 8 seitlich von einer Grundlinie 30 abgewichen, weil sich das Rad 8 beim Einschlagen auf dem Rollradius bewegt, dessen Mittelpunkt im Achsschenkelbolzen 4 liegt. Das von dem Winkelmeßgerät 8 abgegebene Winkelsignal entspricht daher dem Winkel (α + x). Andererseits entspricht das Ausgangssignal des Winkelmeßgeräts 12 dem Auslenkwinkel x. Aus den beiden Ausgangssignalen der Winkelmeßgeräte 8 und 12 läßt sich daher durch einfache Subtraktion der Winkel α ermitteln. Auch dieser Darstellung ergibt sich auch, daß eine exakte Ausrichtung der Meßbasis auf die Grundlinie 30 bei Beginn der Messung nicht erforderlich ist. Wenn die Meßbasis so angeordnet wird, daß die Längsmittelachse der Grundplatte 20 seitlich parallel gegenüber der Grundlinie 30 versetzt ist, vergrößert oder verkleinert sich der Winkel x und damit das Ausgangssignal des Winkelmeßgeräts 12 bzw. der entsprechende Anteil des Ausgangssignals des Winkelmeßgeräts 8 um jeweils die gleichen Beträge, so daß bei Verrechnung der Ausgangssignale der beiden Winkelgeber 8, 12 der Winkel α ermittelt wird. Wenn die Grundplatte 20 eine solche Fehlausrichtung gegenüber der Grundlinie 30 hat, daß die Grundplatte 20 einen Winkel zu der Grundlinie 30 bildet, d.h. wenn die Meßbasis 16 verdreht ist, steht der Meßarm 14 unter einem Winkel zu der Grundlinie 30, während der Meßarm 10 auf der Grundlinie liegt. Eine solche Fehlausrichtung der Meßbasis 16 muß bei Verwendung von Drehpotentiometern als Winkelmeßgeräte prinzipiell beispielsweise in der elektronischen Schaltung dadurch berücksichtigt werden, daß die anfängliche Auslenkung des Winkelmeßgeräts 12 gespeichert und bei der Berechnung des Winkels α berücksichtigt wird. Der entsprechende Teil der elektronischen Schaltung kann jedoch in vorteilhafter Weise entfallen, wenn für die Winkelmeßgeräte inkrementale Winkelgeber verwendet werden, die keine absoluten Nullpunkt haben sondern nur die Auslenkung zwischen einer Anfangsstellung und einer Endstellung messen. Solche inkrementalen Winkelgeber wandeln durch optische Abtastung die Winkelstellung der Gerätewelle in digitale Signale um, die an dem Ausgang abgegriffen werden können. Die elektrischen Ausgangssignale dieser inkrementalen Winkelgeber werden einer elektrischen Schaltung zugeführt, die in der Meßbasis untergebracht ist, und sie werden in dieser Schaltung einer Subtraktion unterworfen, um den Winkel α zu erhalten.

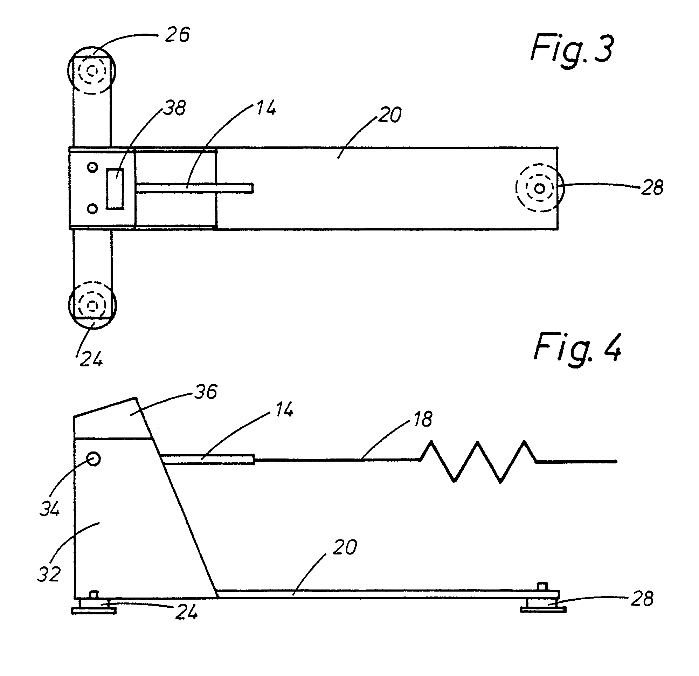

Die Fig. 3 und 4 zeigen eine vergrößerte Draufsicht bzw. Seitenansicht der Meßbasis 16. Auf der Grundplatte 20 ist ein Gehäuse 32 angeordnet, in dem das Winkelmeßgerät 12 mit dem Meßarm 14 gelagert ist. Das Winkelgerät ist auf einer horizontalen und im wesentlichen senkrecht zu der Grundlinie 30 stehenden Achse 34 schwenkbar gelagert. Damit kann sich das Winkelmeßgerät 12 auf die Höhenlage des Winkelmeßgeräts 8 einstellen, auch wenn das Winkelmeßgerät 8 höher oder tiefer als das Winkelmeßgerät 12 liegt, was beispielsweise bei der Vermessung unterschiedlich großer Räder der Fall sein kann. Auf dem Gehäuse 32 der Meßbasis 16 ist eine Konsole 36 vorgesehen, die die elektrische Schaltung und eine Anzeigeeinrichtung 38 in Form einer Ziffernanzeige enthält. Außerdem enthält die Konsole 36 Schalter für das Ein-und Ausschalten der Anordnung sowie für das Löschen der Anzeige. Die elektrischen Leitungen zwischen dem Winkelmeßgerät 8 und der elektrischen Schaltung, die elektrische Schaltung selbst und die Versorgungskabel für die Anordnung sind zur Vereinfachung nicht dargestellt.

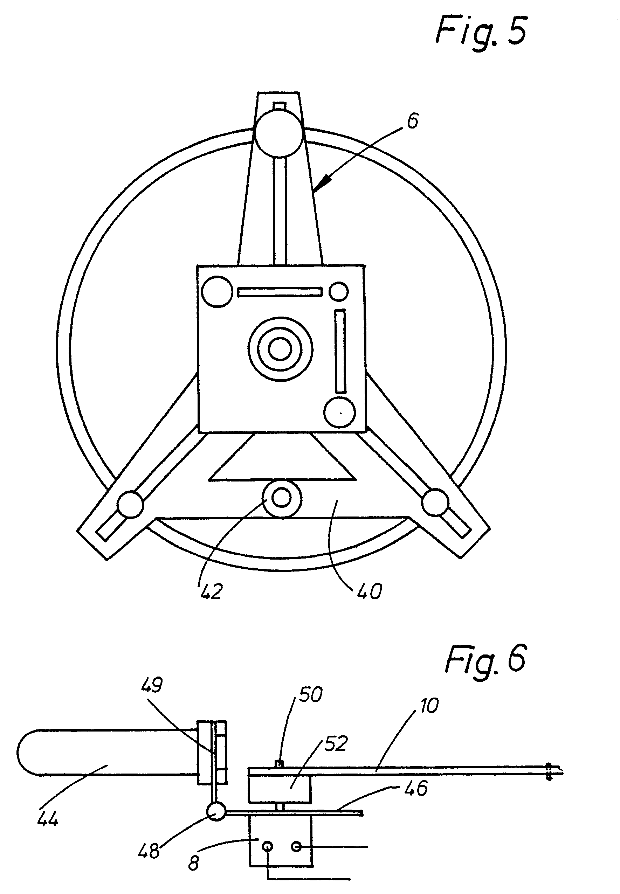

Fig. 5 zeigt die seitliche Draufsicht auf einen im wesentlichen bekannten Meßgerätehalter, der als Aufnahmeeinrichtung 6 für das Meßgerät 8 dient. Dazu hat die Aufnahmeeinrichtung 6 einen Steg 40 mit einer Bohrung 42, in die ein Bolzen 44 einsteckbar ist, der das Winkelmeßgerät 8 mit dem Meßarm 10 trägt. Das Winkelmeßgerät 8 ist an einer Platte 46 montiert, die über ein um eine horizontale und im wesentlichen senkrecht zu der Verlängerung der Drehachse des Rades stehende Achse schwenkbares Scharnier 48 mit einer weiteren Platte 49 verbunden ist, die an dem Bolzen 44 befestigt ist. Der Meßarm 10 ist auf der Drehwelle 50 des Winkelmeßgeräts 8 durch eine Halterung 52 befestigt. Aufgrund des Scharniers 48 kann auch das Winkelmeßgerät 8 sich auf eine unterschiedliche Höhenlage zwischen dem Winkelmeßgerät 8 und dem Winkelmeßgerät 12 einstellen.

Die bisher beschriebene Anordnung ermöglicht die Messung des Einschlagwinkels eines einzelnen lenkbaren Rades und kann daher bei der Messung des Nachlaufs, der Spreizung und des maximalen Einschlagwinkels der Lenkung verwendet werden. Zur Messung des Spurdifferenzwinkels werden derartige Anordnungen an beiden lenkbaren Rädern benötigt, wobei die Messung der Einschlagwinkel an beiden Rädern in der oben beschriebenen Weise erfolgt. Bei der Messung des Spurdifferenzwinkels kann eine zusätzliche elektronische Schaltung vorgesehen sein, in der die Einschlagwinkelsignale, die die Einschlagwinkel der lenkbaren Räder eines Räderpaares darstellen, zur Erzeugung des Spurdifferenzwinkelsignales verrechnet werden, und es kann eine mit der zusätzlichen Schaltung verbundene, zusätzliche Anzeigevorrichtung für den dem Spurwinkeldifferenzsignal entsprechenden Spurdifferenzwinkel vorgesehen sein.

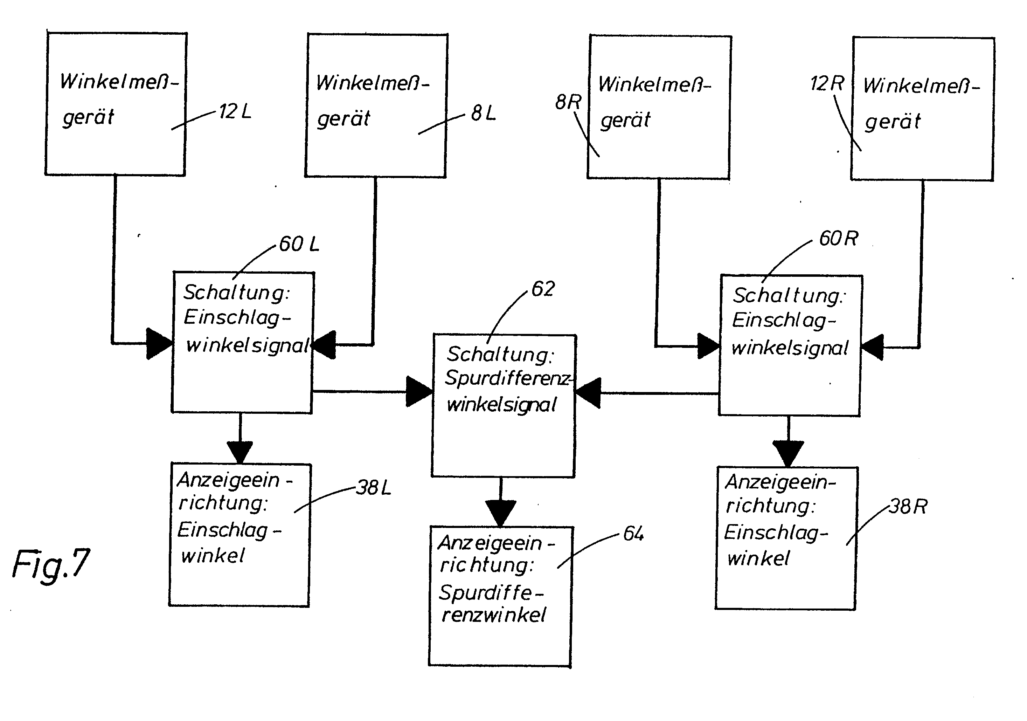

Fig. 7 zeigt eine schematische Blockdarstellung der Anordnung zur Messung des Spurdifferenzwinkels, wobei die Anordnung zur Messung des Einschlagwinkels des linken lenkbaren Rades die oben benutzen Bezugszeichen unter Hinzufügung des Buchstabens "L" und die Anordnung zur Messung des Einschlagwinkels des rechten Rades die oben benutzen Bezugszeichen unter Hinzufügung des Buchstabens "R" haben. Für das linke lenkbare Rad werden die Ausgangssignale der Winkelmeßgeräte 8L, 12L der elektrischen Schaltung 60L zugeführt, die das Einschlagwinkelsignal erzeugt und es an die Anzeigeeinrichtung 38L zur Anzeige des Einschlagwinkels abgibt. Entsprechend werden die Ausgangssignale der Winkelmeßgeräte 8R, 12R der Schaltung 60R und von dort der Anzeigeeinrichtung 38R zugeführt. Die Ausgangssignale der Schaltung 60L, 60R gelangen an die Schaltung 62, in der das Spurdifferenzwinkelsignal als Differenz der Einschlagwinkelsignale ermittelt wird, die von den Schaltungen 60L, 60R abgegeben werden. Das Spurdifferenzwinkelsignal wird an die Anzeigeeinrichtung 64 abgegeben und dort als Spurdifferenzwinkel angezeigt.

Wie oben beschrieben wurde, sind die Schaltungen 60L, 60R und die Anzeigeeinrichtungen 38L, 38R bei der einfachen Ausführung der Anordnung in der jeweiligen Meßbasis untergebracht. Wie aus Fig. 7 ersichtlich ist, können die Anzeigeeinrichtungen 38L, 38R und 64 sowie die elektrische Schaltung 62 auch in einem von dem ersten Winkelmeßgerät 12L, 12R und der Meßbasis 16 getrennten Gehäuse bzw. in einem sog. Pilotgerät angeordnet sein. Ein solches Pilotgerät kann der Bedienungsmann so aufstellen, daß er es bei der Bedienung der Lenkung beobachten kann. Der Bedienungsmann kann dann die erforderlichen Messungen durchführen, ohne seinen Platz an dem Lenkrad zu verlassen. Die verschiedenen Anzeigen können dem Bedienungsmann auch auf einer Großanzeige oder einem Bildschirm angeboten werden, was ihm ebenfalls ermöglicht, die Messungen ohne Verlassen seines Platzes am Lenkrad durchzuführen.

**Ansprüche**

1. Anordnung zur Messung des Einschlagwinkels eines lenkbaren Rades eines Kraftfahrzeuges, mit einem ersten elektrischen Winkelmeßgerät (8) mit einem um eine im wesentlichen senkrechte Achse schwenkbaren Meßarm (10), das an dem lenkbaren Rad montierbar ist, einem zweiten elektrischen Winkelmeßgerät (12) mit einem um eine im wesentlichen senkrechte Achse schwenkbaren Meßarm (14), das an einer Meßbasis (16) angeordnet ist, einem die beiden Meßarme miteinander verbindenden elastischen Zugelement (18), einer mit den Winkelmeßgeräten verbundenen, elektronischen Schaltung, in der von den Winkelmeßgeräten abgegebene Winkelsignale miteinander zur Erzeugung eines Einschlagwinkelsignals verrechnet werden, und mit einer mit der elektronischen Schaltung verbundenen Anzeigeeinrichtung (38) für den dem Einschlagwinkelsignal entsprechenden Einschlagwinkel, **dadurch gekennzeichnet,** daß die Meßbasis (16) abseits vom Kraftfahrzeug in etwa auf der Verlängerung der Drehachse des Rades auf dem Boden aufstellbar ist, wenn bei Beginn der Messung das Rad auf "Fahrt geradeaus" steht.

2. Anordnung nach Anspruch 1, **dadurch gekennzeichnet,** daß die Winkelmeßgeräte (8, 12) jeweils um eine horizontale und im wesentlichen senkrecht zu der Verlängerung der Drehachse des Rades stehenden Achse schwenkbar gelagert sind.

3. Anordnung nach Anspruch 1 oder 2, **dadurch gekennzeichnet,** daß die Winkelmeßgeräte (8, 12) inkrementale Winkelgeber sind.

4. Anordnung nach einem der Ansprüche 1 bis 3, **dadurch gekennzeichnet,** daß die elektronische Schaltung eine Subtraktionsschaltung aufweist.

5. Anordnung nach Anspruch 1, **dadurch gekennzeichnet,** daß die Anzeigeeinrichtung (34) eine Ziffernanzeige aufweist.

6. Anordnung nach einem der Ansprüche 1 bis 5, **dadurch gekennzeichnet,** daß die elektronische Schaltung und die Anzeigeeinrichtung (38) in der Meßbasis (16) angeordnet sind.

7. Anordnung zur Messung des Spurdifferenzwinkels der lenkbaren Räder eines Kraftfahrzeuges, umfassend je eine Anordnung nach einem der Ansprüche 1 bis 5 für jedes lenkbare Rad.

8. Anordnung nach Anspruch 7, **gekennzeichnet**

**durch** eine zusätzliche elektronische Schaltung (62), in der die Einschlagwinkelsignale, die die Einschlagwinkel der lenkbaren Räder eines Räderpaares darstellen, zur Erzeugung eines Spurdifferenzwinkelsignals verrechnet werden, und durch eine mit der zusätzlichen elektronischen Schaltung (62) verbundene, zusätzliche Anzeigeeinrichtung (64) für den dem Spurdifferenzwinkesignal entsprechenden Spurdifferenzwinkel.

9. Anordnung nach einem oder mehreren der Ansprüche 1 bis 5, sowie 7 und 8, **dadurch gekennzeichnet,** daß die Anzeigeeinrichtungen (38 und/oder 64) in einem von dem ersten Winkelmeßgerät (8) und der Meßbasis (16) räumlich getrennten Gehäuse angeordnet sind.

## Claims

1. Device for measuring the lock angle of a steerable wheel of a vehicle, which comprises a first electric angle measuring unit (8) with a measuring arm (10) pivoting around an essentially vertical axis which is mountable on the steerable wheel, a second electric angle measuring unit (12) with a measuring arm (14) pivoting around an essentially vertical axis which is arranged on a measuring base (16), an elastic tension element (18) linking the two measuring arms, an electronic circuit connected to the angle measuring units, wherein the angular signals emitted by the angle measuring units are computed in a correlate manner to generate a lock angle signal, and an indicator (38) connected to the electronic circuit for the lock angle corresponding to the lock angle signal,
**characterized in that**
the measuring base (16) is suitable for being disposed on the ground remote from the vehicle approximately on the prolongation of the rotational axis of the wheel if at the beginning of the measurement the wheel is positioned at "straight-on drive".

2. Device according to claim 1, **characterized in** that the angle measuring units (8, 12) are each pivotably mounted around a horizontal axis being essentially perpendicular to the prolongation of the rotational axis of the wheel.

3. Device according to claim 1 or 2, **characterized in** that the angle measuring units (8, 12) are incremental angle transmitters.

4. Device according to any of the claims 1 to 3, **characterized in** that the electronic circuit is provided with a subtractive circuit.

5. Device according to claim 1, **characterized in** that the indicator (34) is provided with a numerical display.

6. Device according to any of the claims 1 to 5, **characterized in** that the electronic circuit and the indicator (38) are arranged in the measuring base (16).

7. Device for measuring the relative steering angle of the steerable wheels of a vehicle, comprising a device according to any of the claims 1 to 5 for each steerable wheel.

8. Device according to claim 7, **characterized in** that there is provided an additional electronic circuit (62) wherein the lock angle signals representing the lock angles of the steerable wheels of a pair of wheels are computed in a correlate manner to generate a relative steering angle signal, and an additional indicator (64) connected to the additional electronic circuit (62) for the relative steering angle corresponding to the relative steering angle signal.

9. Device according to one or more of claims 1 to 5, as well as 7 and 8, **characterized in** that the indicators (38 and/or 64) are arranged in a housing which is separate from the first angle measuring unit (8) and the measuring base (16).

## Revendications

1. Dispositif de mesure de l'angle de braquage d'une roue dirigeable d'un véhicule automobile comportant un premier instrument électrique mesureur d'angle (8) ayant un bras de mesure (10) pivotant autour d'un axe sensiblement perpendiculaire et apte à être monté sur ladite roue dirigeable, un deuxième instrument électrique mesureur d'angle (12) ayant un bras de mesure (14) pivotant autour d'un axe sensiblement perpendiculaire et disposé sur une base de mesure (16), un élément de traction élastique (18) reliant les deux bras de mesure, un circuit électronique relié aux instruments mesureurs d'angle où les signaux angulaires émis par lesdits instruments mesureurs d'angle sont calculés de manière corrélative afin de créer un signal d'angle de braquage, et un indicateur (38) relié au circuit électronique pour l'angle de braquage correspondant au signal d'angle de braquage,
**caractérisé en ce que**
la base de mesure (16) est apte à être arrangée au sol à l'écart du véhicule automobile environ sur la prolongation de l'axe de rotation de la roue lorsqu' au commencement du mesurage la roue se trouve en position "marche en ligne droite".

2. Dispositif selon revendication 1, **caractérisé en ce que** les instruments mesureurs d'angle (8, 12) sont respectivement logés de manière pivotante autour d'un axe horizontal et sensiblement perpendiculaire sur la prolongation de l'axe de rotation de la roue.

3. Dispositif selon revendication 1 ou 2, **caractérisé en ce que** les instruments mesureurs d'angle (8, 12) sont des transmetteurs angulaires incrémentiels.

4. Dispositif selon l'une des revendications 1 à 3, **caractérisé en ce que** le circuit électronique comporte un circuit soustractif.

5. Dispositif selon revendication 1, **caractérisé en ce que** l'indicateur (34) comporte une indication numérique.

6. Dispositif selon l'une des revendications 1 à 5, **caractérisé en ce que** le circuit électronique et l'indicateur (38) sont disposés dans la base de mesure (16).

7. Dispositif pour mesurer l'effet d'Ackermann des roues dirigeables d'un véhicule automobile comportant un dispositif selon l'une des revendications 1 à 5 pour chaque roue dirigeable.

8. Dispositif selon revendication 7, **caractérisé en ce qu'**il comporte un circuit électronique supplémentaire (62) où le signaux d'angle de braquage représentant les angles de braquage des roues dirigeables d'une paire de roues sont calculés de manière corrélative pour créer un signal d'effet d'Ackermann, et un indicateur (64) supplémentaire relié au circuit électronique supplémentaire (62) pour l'effet Ackermann correspondant au signal d'effet Ackermann.

9. Dispositif selon l'une ou plusieures des revendications 1 à 5 ainsi que 7 et 8, **caractérisé en ce que** les indicateurs (38 et/ou 64) sont disposés dans un carter séparé du premier instrument mesureur d'angle (8) et de la base de mesure (16).

## Fig.1

## Fig.2

Fig. 3

Fig. 4

*Fig. 5*

*Fig. 6*

EP 0 270 705 B1

Fig.7

```
┌──────────────┐      ┌──────────────┐          ┌──────────────┐      ┌──────────────┐
│ Winkelmeß-   │      │ Winkelmeß-   │          │ Winkelmeß-   │      │12R Winkelmeß-│
│ gerät        │      │ gerät        │          │ gerät        │      │    gerät     │
│          12L │      │          8L  │      8R  │              │      │              │
└──────┬───────┘      └──────┬───────┘          └──────┬───────┘      └──────┬───────┘
```

60 L

60 R

```
     ┌──────────────┐         62              ┌──────────────┐
     │ Schaltung:   │                          │ Schaltung:   │
     │ Einschlag-   │    ┌──────────────┐      │ Einschlag-   │
     │ winkelsignal │    │ Schaltung:   │      │ winkelsignal │
     │              │───▶│ Spurdifferenz│◀─────│              │
     └──────┬───────┘    │ winkelsignal │      └──────┬───────┘
            │            └──────┬───────┘             │
            ▼                   ▼                      ▼
     ┌──────────────┐    ┌──────────────┐      ┌──────────────┐
     │ Anzeigeein-  │    │ Anzeigeein-  │  64  │ Anzeigeein-  │
     │ richtung:    │38L │ richtung:    │      │ richtung:    │ 38R
     │ Einschlag-   │    │ Spurdiffe-   │      │ Einschlag-   │
     │ winkel       │    │ renzwinkel   │      │ winkel       │
     └──────────────┘    └──────────────┘      └──────────────┘
```